Europäisches Patentamt

(19) European Patent Office

Office européen des brevets

(11) EP 0 826 733 A2

(12) EUROPEAN PATENT APPLICATION

(43) Date of publication:
04.03.1998 Bulletin 1998/10

(51) Int. Cl.⁶: **C08L 83/04**

(21) Application number: 97114648.5

(22) Date of filing: 23.08.1997

(84) Designated Contracting States:
AT BE CH DE DK ES FI FR GB GR IE IT LI LU MC NL PT SE

(30) Priority: 03.09.1996 US 707259

(71) Applicant:
DOW CORNING CORPORATION
Midland Michigan 48686-0994 (US)

(72) Inventors:
• Conway, Lori Jean
Midland, Michigan 48640 (US)

• Griffith, Phillip Joseph
South Glamorgan, Wales CF64 2LY (GB)
• Jensen, Jary David
Midland, Michigan 48642 (US)
• Lamont, Peter
Midland, Michigan 48642 (US)

(74) Representative:
Patentanwälte Sternagel & Fleischer
Braunsberger Feld 29
51429 Bergisch Gladbach (DE)

(54) **Silicone rubber compositions containing high molecular weight organopolysiloxanes**

(57) A platinum group-metal curing silicone rubber composition is claimed herein having enhanced physical properties such as tear and heat aging, especially at durometers below 35 and above 65. We have unexpectedly found that addition of diorganohydrogensiloxy endblocked polydiorganosiloxanes and triorganosiloxy endblocked polydiorganosiloxanes, having a viscosity greater than 10 Pa • s at 25°C. to silicone rubber compositions provide for superior properties.

EP 0 826 733 A2

## Description

The present invention is a platinum group-metal curing silicone rubber composition having improved physical properties, such as tear strength and heat stability, especially at durometers (shore A) below 35 and above 65, inclusive. We have unexpectedly found that the addition of diorganohydrogensiloxy end-blocked polydiorganosiloxanes and triorganosiloxy end-blocked polydiorganosiloxanes having a viscosity greater than 10 Pa·s at 25°C. to silicone rubber compositions will provide improved properties.

The prior art is typically represented by the following U.S. Patents 3,967,473, 3,884,866, 4,753,978 and 4,057,596.

Our claimed invention has improved physical properties, especially tear strength, tensile strength and resistance to heat aging. These compositions are especially useful for forming cured silicon elastomers with durometers in the ranges between 15 and 35, inclusive and 65 or greater. All durometer values mentioned hereinafter are those determined by ASTM D2240 (Shore A). The claimed platinum-group metal curing silicone rubber composition comprises:

(A) 35 to 75 weight percent, based on the weight of the total composition, of a diorganoalkenylsiloxy terminated polydiorganosiloxane having a viscosity within a range of 20 to 200 Pa·s at 25°C. and essentially containing no ethylenically unsaturated hydrocarbon radicals bonded to non-terminal silicon atoms;

(B) 0 to 30 weight percent, based on the total weight of the composition of a diorganoalkenylsiloxy terminated polydiorganosiloxane having a viscosity within a range of 0.1 to 200 Pa·s at 25°C., where from 1 to 5 percent of the non-terminal repeating units of the diorganoalkenylsiloxy terminated polydiorganosiloxane comprises an alkenyl radical;

(C) 1 to 30 weight percent, based on the total weight of the composition, of a polydiorganosiloxane described by formula $R^1_2R^2SiO(R^1R^2SiO)_xOSiR^1_2R^2$, where each $R^1$ is independently selected from saturated monovalent hydrocarbon radicals or aryl radicals, each $R^2$ is independently selected from the group consisting of hydrogen atom, $R^1$ and alkenyl radicals, with the proviso that $R^2$ comprises no more than one alkenyl radical per polydiorganosiloxane molecule and x is a value such that the polydiorganosiloxane has a viscosity greater than 10 Pa·s at 25°C.;

(D) 5 to 40 weight percent, based on the total weight of the composition of a treated reinforcing silica filler;

(E) an amount of an organohydrogensiloxane crosslinker sufficient to cure the composition; and

(F) a platinum group metal-containing catalyst in an amount sufficient to effect curing of the composition.

Component (A) is a diorganoalkenylsiloxy end-blocked polydiorganosiloxane, having a viscosity within a range of 20 to 200 Pa·s at 25°C. and essentially containing no ethylenically unsaturated hydrocarbon radicals bonded to non-terminal silicon atoms. Component (A) is preferably described by formula $R^5R^3_2SiO(R^4_2SiO)_mSiR^3_2R^5$, where $R^3$ and $R^4$ are independently selected saturated monovalent hydrocarbon radicals comprising 1 to 20 carbon atoms, each $R^5$ is an independently selected alkenyl radical comprising 2 to 12 carbon atoms and m represents a degree of polymerization (DP) equivalent to a viscosity of 20 to 200 Pa·s at 25°C. Preferred is when m represents a DP equivalent to a viscosity of 40 to 70 Pa·s at 25°C. Component (A) essentially contains no ethylenically unsaturated hydrocarbon radicals bonded to non-terminal silicon atoms. By the term "essentially no ethylenically unsaturated hydrocarbon radicals bonded to non-terminal silicon atoms," it is meant that the only ethylenically unsaturated hydrocarbon radicals present on the non-terminal silicon atoms of component (A) result from impurities present in the reactants used to prepare component (A) or from undesired rearrangements occurring during the preparation of component (A).

In component (A), it is preferred that $R^3$ be an alkyl radical comprising one to four carbon atoms. Most preferred is when all of the $R^3$ substituents of component (A) are methyl.

In component (A), it is desirable that at least one of the $R^4$ radicals substituted on the non-terminal silicon atoms also be an alkyl radical comprising 1 to 4 carbon atoms, preferably methyl. The other $R^4$ radicals substituted on the non-terminal silicon atoms are alkyls such as methyl or ethyl; substituted alkyls such as chloromethyl, 3-chloropropyl or 3,3,3-trifluoropropyl; cycloalkyls such as cyclopentyl or cyclohexyl; or aryls such as phenyl, xylyl, tolyl and naphthyl. In component (A), it is preferred that any $R^3$ radical other than methyl be selected from phenyl or 3,3,3-trifluoropropyl.

In component (A), $R^5$ is, for example, vinyl, allyl and hexenyl. The preferred component A is one in which $R^5$ is vinyl.

The preferred component (A) is a dimethylvinylsiloxy end-blocked polydimethylsiloxane having a viscosity within a range of 40 to 70 Pa·s at 25°C. Preferred is when component (A) comprises 50 to 60 weight percent of the composition.

The present composition comprises 0 to 30 weight percent, based on the total weight of the composition of a diorganoalkenylsiloxy terminated polydiorganosiloxane (component (B)) having a viscosity within a range of 0.1 to 200 Pa·s at 25°C., where from 1 to 5 percent of the non-terminal repeating units of the diorganoalkenylsiloxy terminated polydiorganosiloxane comprise an alkenyl radical. Component (B) of the present composition is preferably described by formula $R^5R^3_2SiO(R^3R^4SiO)_n(R^5R^4SiO)_pSiR^3_2R^5$, where $R^3$, $R^4$ and $R^5$ are as previously described, the DP represented by the sum of n and p is equivalent to a viscosity of 0.1 to 200 Pa·s at 25°C. and the ratio of p/(n+p) is within a range of 0.01 to 0.05. It is preferred that the DP of component (B) be less than that of component (A) and that the viscosity be within a range of 0.1 to 20 Pa·s at 25°C.

Component (B) is optional in the present composition, but when required as much as 30 weight percent of component (B), based on the total weight of the composition, may be added. As taught in U.S. Patent 4,753,978, diorganoalkenylsiloxy end-blocked polydiorganosiloxanes within the scope of our component (B), when combined with diorganoalkenylsiloxy end-blocked polydiorganosiloxanes within the scope of our component (A), may provide for compositions having improved physical properties, such as tear strength, when cured. Usually, if component (B) is added to the present composition, it is preferred that this component comprise 5 to 30 weight percent of the total composition. More preferred is when component (B) comprises 5 to 15 weight percent of the composition.

The present composition also requires the presence of 1 to 30 weight percent of component (C) which is a polydiorganosiloxane described by formula $R^1_2R^2SiO(R^1R^2SiO)_xOSiR^1_2R^2$. Preferred is when component (C) comprises 10 to 20 weight percent of the total composition.

In this formula for (C), each $R^1$ is independently selected from saturated monovalent hydrocarbon radicals or aryl radicals, each $R^2$ is independently selected from the group consisting of hydrogen atom, $R^1$ and alkenyl radicals, with the proviso that $R^2$ comprise no more than one alkenyl radical per polydiorganosiloxane molecule and x is a value such that the polydiorganosiloxane has a viscosity of 10 Pa·s or greater at 25°C. Preferred is when $R^1$ is a saturated monovalent hydrocarbon radical comprising 1 to 12 carbon atoms. $R^1$ can be an unsubstituted or substituted saturated monovalent hydrocarbon radical. $R^1$ is, for example, an alkyl such as methyl or ethyl; a cycloalkyl such as cyclopentyl or cyclohexyl; a substituted alkyl such as chloromethyl, 3-chloropropyl and 3,3,3-trifluoropropyl; and an aryl such as phenyl, xylyl, tolyl and naphthyl. In a preferred embodiment, it is preferred that each $R^1$ be methyl.

Each substituent $R^2$ is independently selected from a group consisting of hydrogen atom, $R^1$ as defined above and alkenyl radical. $R^2$ is, for example, an alkenyl radical comprising 1 to 12 carbon atoms such as vinyl, allyl and hexenyl. Preferred is when each $R^2$ is independently selected from the group consisting of hydrogen atom, methyl and vinyl, with the proviso that only one $R^2$ in each organopolysiloxane molecule be vinyl. In the above formula for component (C), x is a value such that the polydiorganosiloxane has a viscosity of 10 Pa·s or greater at 25°C. Preferred is when x is a value such that component (C) has a viscosity greater than 20 Pa·s at 25°C. Even more preferred is when component (C) has a viscosity greater than the viscosity of the component (A). The upper limit for the value of x is not limiting and is usually a value such that component (A) has a viscosity up to 1,000 Pa·s or greater. The only limitation on the value of x is that the viscosity of component (C) be such that it can be blended into component (A). It is preferred that x be a value such that component (C) has a viscosity within a range of 60 to 1000 Pa·s at 25°C.

Examples of polydiorganosiloxanes useful as component (C) in the present compositions include trimethylsiloxy end-blocked polydimethylsiloxane, dimethylhydrogensiloxy end-blocked polydimethylsiloxane and polydimethylsiloxane end-blocked on one end with a dimethylhydrogensiloxy group and with a dimethylvinylsiloxy group on the other end.

We have unexpectedly found that the addition of component (C) to our composition provides for a silicone rubber composition with improved physical properties when cured. This composition is especially useful to form elastomers having a durometer (Shore A) within a range of 15 to 35 or elastomers having durometers (Shore A) of 65 or greater. The present compositions are cured to form silicone elastomers having enhanced physical properties, such as tear strength, tensile strength and heat resistance. Therefore, a preferred composition when cured forms a silicone elastomer having a Shore A durometer within a range of 15 to 35. More preferred is a composition which cures to form a silicone elastomer having a Shore A durometer of 20 to 30. Other preferred compositions are those which cure to have a durometer above 65. More preferred are those compositions which have a durometer within a range of 70 to 80.

The present composition comprises 5 to 40 weight percent, based on the total weight of the composition, of a treated reinforcing silica filler. Preferred is when our composition comprises 10 to 30 weight percent of treated silica filler, based on the total weight of the composition. The silica filler can be any of those known in the art to be useful for the reinforcement of organosiloxane compositions. Preferred is when said filler is a precipitated or fumed silica, with fumed silica being most preferred. It is preferred that our treated reinforcing silica filler have a BET surface area greater than 50 m$^2$/g. More preferred is a BET surface area within a range of 200 to 500 m$^2$/g. Most preferred is a BET surface area within a range of 250 to 400 m$^2$/g.

The reinforcing silica filler herein is "treated" with one or more of the silica treating agents known to improve the reinforcing function of silica and also recognized to prevent the phenomenon typically referred to as "creping" or "crepe hardening" which can occur during storage of such compositions. The silica treating agent can be any of the low molecular weight organosilicon compounds disclosed in the art as suitable for such a treating agent. These treating agents are typically hydroxy terminated polydiorganosiloxanes, containing an average of 2 to 20 repeating units per molecule and organosilicon compounds such as hexaorganodisiloxanes or hexaorganodisilazanes that hydrolyze under the conditions used to treat the silica. For the present compositions, a preferred silica treating agent is selected from the group consisting of hexamethyldisilazane, sym-tetramethyldivinyldisilazane and hydroxy-terminated polydimethylsiloxanes comprising 8 repeating units.

The silica filler may be treated with one or more treating agents prior to addition to our claimed composition or it may be treated *in situ*. By "*in situ*", it is meant that the silica filler is treated with treating agent in the presence of at least a portion of component (A), component (B) or a mixture thereof. Preferred is when the reinforcing silica filler is treated *in situ*.

The present composition requires an amount sufficient to cure the composition of an organohydrogensiloxane crosslinker. The organohydrogensiloxanes useful as a crosslinker in our composition are well known in art and are described in U.S. Patents 3,967,473; 3,989,668 and 4,753,978. The useful organohydrogensiloxanes in our compositions are any organohydrogensiloxanes having an average of at least three silicon-bonded hydrogen atoms per molecule and an average of no more than one silicon-bonded hydrogen atom per silicon atom. The remaining valences of the silicon atoms are usually satisfied by divalent oxygen atoms and monovalent hydrocarbon radicals such as methyl, vinyl and phenyl. The organohydrogensiloxanes can be homopolymers, copolymers and mixtures thereof which contain units selected from diorganosiloxy, organohydrogensiloxy, triorganosiloxy and $SiO_2$. The organohydrogensiloxanes can be linear, cyclic and branched polymers or copolymers. Specific examples of organohydrogensiloxanes useful in our compositions include polymethylhydrogensiloxane cyclics, polymethylhydrogensiloxanes end-blocked with dimethylhydrogensiloxy units or trimethylsiloxy units and copolymers comprised of dimethylsiloxy units and methylhydrogen siloxy units which are end-blocked with dimethylhydrogensiloxy units or trimethylsiloxy units.

The amount of organohydrogensiloxane useful in the claimed composition is that sufficient to effect cure of our composition to a silicone rubber. Normally, a useful amount of organohydrogensiloxane is that sufficient to provide a ratio of silicon-bonded hydrogen atoms to alkenyl substituents provided by component (A) and (B), respectively, within a range of 1:10 to 10:1. Preferred is where the ratio of silicon-bonded hydrogen atoms provided by the organohydrogensiloxane to alkenyl substituents of component (A) and component (B) is within a range of 1:1 to 3:1. Even more preferred is where this ratio is within a range of 1.7:1 to 2:1.

The present composition comprises a platinum group metal-containing catalyst in an amount sufficient to promote curing of our composition. This catalyst can be any such catalyst which is known to catalyze the reaction of silicon-bonded hydrogen atoms with silicon-bonded alkenyl groups. By "platinum group metal", it is meant ruthenium, rhodium, palladium, osmium, iridium and platinum. A group of such catalysts particularly useful in the present compositions are the complexes prepared from chloroplatinic acid as described by U.S. Patent 3,419,593. A preferred catalyst is a platinum-containing complex which is the neutralized reaction product of chloroplatinic acid and sym-divinyltetramethyldisiloxane. Other examples of useful catalysts are found in U.S. Patents No. 3,989,668; 5,036,117; 3,159,601; 3,220,972; 3,296,291; 3,516,946; 3,814,730 and 3,928,629, all of which show useful platinum group metal-containing catalysts and methods for their preparation.

The amount of platinum group-metal containing catalyst useful in effecting cure of the present composition is not narrowly limited as long as there is a sufficient amount present to accelerate a reaction between the silicon-bonded hydrogen atoms of the organohydrogensiloxane crosslinker and the alkenyl substituents of components (A) and (B). The appropriate amount of platinum group metal catalyst will depend upon the particular catalyst used. In general, as low as 0.001 part by weight of platinum group metal for every one million parts (ppm) by weight of the present composition is useful. Preferably, the amount of platinum group metal is at least 1 ppm on the same basis. More preferred is at least 1 to 10,000 ppm of platinum group metal on the same basis.

The present composition may cure rapidly at room temperature. To hinder this curing process, an inhibitor may optionally be added to our composition. This inhibitor can be any of those materials known to inhibit the catalytic activity of platinum group metal-containing catalysts. By "inhibitor", we mean a material that retards room temperature cure of a composition when incorporated therein at less than 10 weight percent of the total composition, without preventing the elevated temperature cure of said composition.

Inhibitors of platinum group metal-containing catalysts are well known in the art. A preferred class of inhibitors useful in our composition are acetylenic alcohols as described in U.S. Patent 3,445,420. Such acetylenic alcohols are exemplified by 1-ethynyl-1-cyclohexanol or 2-methyl-3-butyn-2-ol. Other examples of inhibitors useful in the present compositions are described in U.S. Patent 5,036,117.

The amount of inhibitor useful in our composition is not critical and can be any amount that will retard the platinum group metal catalyzed reaction of hydrogen atoms of the organohydrogensiloxane with the alkenyl substituents of components (A) and (B), while not preventing the reaction at elevated temperatures. The specific amount of inhibitor used will depend upon the particular inhibitor, the concentration and type of catalyst and the nature and amounts of components (A) and (B) or the organohydrogensiloxane crosslinker. Usually, when an inhibitor is added, it is preferred that at least one mole of inhibitor be present for each mole of platinum group metal in the composition and that the inhibitor not exceed one weight percent of the total composition.

The present composition may contain other components, such as mold release agents, colorants, heat stabilizers and electrically conductive materials as long as the physical properties of the composition are not unsatisfactorily impacted.

The present composition can also be formed from a two-part system which cures upon mixing and being subjected to an appropriate temperature. For example, two equal portions comprising components (A), (B) and (C) can be formed and then component (D), the organohydrogensiloxane, added to one portion to form a Part A and next component (E), the platinum group metal-containing catalyst, added to a second portion to form a Part B. The present composition is then formed by combining Part A and Part B. In addition, a platinum group metal catalyst inhibitor may be added to part A.

Examples

Cured silicone elastomers were prepared from the components described in Table 1 at the concentrations described in Table 2. Generally, the compositions of Table 2 were prepared by adding all, or a portion of, component (A) to a blender, then adding the silica and next adding 20 wt%, based on the silica weight, of hexamethyldisilazane and subsequently providing sufficient water to effect hydrolysis of the hexamethyldisilazane. After sufficient mixing to ensure treatment of the filler with the hexamethyldisilazane, the mixture was heated to 160°C. under vacuum for a period of time sufficient to drive off volatile materials. The mixture was cooled and, when present, components (B), (C1) and (C2) were blended into the mixture. The crosslinker, component (E), was added to the mixture at a concentration providing 1.7 to 2.0 moles of silicon-bonded hydrogen atom per mole of vinyl provided to the composition by components (A) and (B), respectively. The catalyst composition, component (F), was added to the composition at a concentration sufficient to provide 8 ppm of platinum metal and 1-ethynyl-1-cyclohexanol was added to the composition at a concentration of 0.05 part per 100 parts of components (A) and (B). The resulting compositions were cured at 150°C. for ten minutes to form test samples for physical properties testing. Additional cured samples were also post-cured at 200°C. for four hours for physical properties testing.

The physical properties of the cured elastomers were tested by the following methods: Durometer (Shore A), ASTM D2240; Tear B, ASTM D625; Tensile, 100% Modulus and Elongation, ASTM D412; and Compression Set (Comp. Set), ASTM D395 (22 h at 177°C.). The extrusion rates of the uncured compositions were tested by extruding the compositions through a die having a 3.2 mm diameter orifice at a pressure of 0.62 MPa (90 psi). The results of the physical properties testing are provided in Tables 3 and 4.

For comparison purposes, physical properties of 20 and 30 durometer (Shore A) silicone rubber compositions commercially available from Dow Corning Corporation (Midland, MI) that do not contain our high molecular weight component (C) were provided in Table 5.

Table 1

| Description of Composition Components | |
|---|---|
| Component | Description |
| A | Dimethylvinylsiloxy end-blocked polydimethylsiloxane having a viscosity of 55 Pa·s at 25°C. |
| B | Dimethylvinylsiloxy end-blocked polydimethylsiloxane having pendant vinyl substitution, total vinyl substitution on silicon of 2 mole% and a viscosity of 0.3 Pa·s at 25°C. |
| C1 | Trimethylsiloxy end-blocked polydimethylsiloxane having a viscosity of 60 Pa·s at 25°C. |
| C2 | Dimethylhydrogensiloxy end-blocked polydimethylsiloxane having a viscosity of 60 Pa·s at 25°C. |
| D | Fumed silica having a BET surface area of 400 $m^2$/g and treated with hexamethyldisilazane. |
| E | Trimethylsiloxy end-blocked copolymer comprising dimethylsiloxy units and methylhydrogensiloxy units having 0.8 weight percent hydrogen bonded to silicon and a viscosity of 16 mPa·s at 25°C. |
| F | Platinum catalyst comprising the neutralized reaction product of chloroplatinic acid with symtetramethyldivinyldisiloxane. |

Table 2

| Description of Test Compositions | | | | | | |
|---|---|---|---|---|---|---|
| Composition number | 1 | 2 | 3 | 4 | 5 | 6 |
| Component | Weight Parts | | | | | |
| A | 70 | 70 | 70 | 70 | 70 | 70 |
| B | 0 | 10 | 20 | - | 10 | 20 |
| C1 | - | - | - | 30 | 20 | 10 |
| C2 | 30 | 20 | 10 | - | - | - |
| E | * | * | * | * | * | * |
| F | ** | ** | ** | ** | ** | ** |

*Component E was added in an amount providing a ratio of silicon-bonded hydrogen atoms to vinyl within a range of 1.7 to 2.
**Component F was added in an amount sufficient to provide a final concentration of platinum in a range of 7 to 8 ppm.

Table 3

| Physical Properties of Cured Compositions Without Post-Cure | | | | | | |
|---|---|---|---|---|---|---|
| | Composition Number | | | | | |
| Physical Property | 1 | 2 | 3 | 4 | 5 | 6 |
| Durometer | 21.2 | 37.7 | 41.1 | 19.1 | 28.4 | 37.6 |
| Tear B, kN/m | 42.7 | 43.6 | 46.7 | 27.8 | 42.5 | 46.0 |
| Tensile, MPa | 8.06 | 7.68 | 7.09 | 8.27 | 8.50 | 7.41 |
| Modulus (100%), MPa | 0.33 | 0.77 | 1.39 | 0.29 | 0.62 | 1.12 |
| Elongation, % | 1009 | 768 | 486 | 951 | 801 | 538 |
| Comp. Set, % | 43 | 56 | 64 | 45 | 46 | 51 |
| Extrusion Rate, g/min | 43 | 43 | 80 | - | - | - |

Table 4

| Physical Properties of Cured Compositions With Post-Cure | | | | | | |
|---|---|---|---|---|---|---|
| | Composition Number | | | | | |
| Physical Property | 1 | 2 | 3 | 4 | 5 | 6 |
| Durometer | 24.8 | 38.8 | 49.3 | 21.2 | 33.3 | 44.8 |
| Tear B, kN/m | 37.5 | 44.1 | 51.3 | 33.3 | 45.3 | 44.6 |
| Tensile, MPa | 8.57 | 7.59 | 7.85 | 9.08 | 8.38 | 7.62 |
| Modulus (100%), MPa | 0.41 | 1.21 | 2.63 | 0.35 | 0.96 | 2.10 |
| Elongation, % | 949 | 660 | 446 | 959 | 751 | 476 |
| Comp. Set, % | 33 | 25 | 21 | 30 | 21 | 19 |

Table 5

| Physical Properties of Comparison Examples | | |
|---|---|---|
| Physical Property | Silastic® 9280-20 | Silastic® 9280-30 |
| Durometer | 20 | 30 |
| Tear B, kN/m | 17.5 | 21.0 |
| Tensile, MPa | 8.27 | 8.27 |
| Elongation, % | 1000 | 850 |

**Claims**

1.  A platinum group-metal curing silicon rubber composition comprising:

    (A) 35 to 75 weight percent, based on the total weight of the composition, of a diorganoalkenylsiloxy end-blocked polydiorganosiloxane having a viscosity within a range of 20 to 200 Pa・s at 25°C. and essentially containing no ethylenically unsaturated hydrocarbon radicals bonded to non-terminal silicon atoms;
    (B) 0 to 30 weight percent, based on the total weight of the composition of a diorganoalkenylsiloxy end-blocked polydiorganosiloxane having a viscosity within a range of 0.1 to 200 Pa・s at 25°C., where from 1 to 5 percent of the non-terminal repeating units of the diorganoalkenylsiloxy end-blocked polydiorganosiloxane comprises an alkenyl radical;
    (C) 1 to 30 weight percent, based on the total weight of the composition, of a polydiorganosiloxane described by formula $R^1_2R^2SiO(R^1R^2SiO)_xOSiR^1_2R^2$, where each $R^1$ is independently selected from saturated monovalent hydrocarbon radicals or aryl radicals, each $R^2$ is independently selected from the group consisting of hydrogen atom, $R^1$ and alkenyl radicals, with the proviso that $R^2$ comprises no more than one alkenyl radical per polydiorganosiloxane molecule and x is a value such that the polydiorganosiloxane has a viscosity greater than 10 Pa・s at 25°C.,
    (D) 5 to 40 weight percent, based on the total weight of the composition, of a treated reinforcing silica filler having a BET surface area greater than 50 m²/g;
    (E) an amount of an organohydrogensiloxane crosslinker sufficient to cure the composition, and
    (F) a platinum group-metal containing catalyst in an amount sufficient to effect curing of the composition.

2.  A composition according to claim 1 where component (B) has a viscosity less than that of component (A) and component (C) has a viscosity greater than component (A).

3.  A composition according to claim 1 where component (C) is selected from the group consisting of trimethylsiloxy end-blocked polydimethylsiloxane and dimethylhydrogensiloxy end-blocked polydimethylsiloxane.

4. A composition according to claim 1 which cures to form a silicone elastomer having a durometer (Shore A) within a range of 15 to 35.

5. A composition according to claim 1 which cures to form a silicone elastomer having a durometer (Shore A) of 65 or greater.

6. A composition according to claim 1 where the treated reinforcing silica filler is treated with a treating agent selected from the group consisting of hexamethyldisilazane, sym-tetramethyldivinyldisilazane and hydroxy-terminated polydimethylsiloxanes comprising 8 repeating units.

7. A composition according to claim 1 where the organohydrogensiloxane crosslinker of component (E) is selected from the group consisting of polymethylhydrogensiloxane cyclics, dimethylhydrogensiloxy end-blocked polymethylhydrogensiloxanes, trimethylsiloxy end-blocked polymethylhydrogensiloxanes, copolymers comprising dimethylsiloxy units and methylhydrogensiloxy units end-blocked with dimethylhydrogensiloxy units and copolymers comprising dimethylsiloxy units and methylhydrogensiloxy units end-blocked with dimethylhydrogensiloxy units.

8. A composition according to claim 1 where the amount of component (E) added to the composition provides a ratio of silicon-bonded hydrogen atoms to alkenyl substituents provided by components (A) and (B), respectively, within a range of 1:10 to 10:1.

9. A composition according to claim 1 comprising at least 1 to 10,000 ppm of platinum group metal within said catalyst.

10. A composition according to claim 1 where a mixture comprising components (A), (B) and (C) is divided into two parts and component (D) is added to one part and component (E) is added to a second part.